# EUROPEAN PATENT SPECIFICATION

(11) **EP 1 583 300 B1**
(45) Date of publication and mention of the grant of the patent: **18.10.2006**
(21) Application number: 05251543.4
(22) Date of filing: 15.03.2005
(51) Int. Cl.: H04L 12/56

(54) **Routing architecture**
Leitweglenkungsarchitektur
Architecture d'acheminement

(30) Priority: 31.03.2004 US 815129
(43) Date of publication of application: 05.10.2005
(73) Proprietor: LUCENT TECHNOLOGIES INC., Murray Hill, New Jersey 07974-0636 (US)
(72) Inventor: Loughran, Kevin, Denville Township NJ 07834 (US); Adelino Silva, Rui, Westfield, NJ 07090 (US); Veltri, Joseph, Totowa, NJ 07512 (US)
(74) Representative: Sarup, David Alexander

(56) References cited:
- EP-A- 1 187 497
- US-B1- 6 426 957
- INTEL CORPORATION: "Intel IXP1200 Network Processor" DATASHEET, [Online] no. 278298-010, December 2001 (2001-12), pages 1-25, XP002329424 Retrieved from the Internet: URL:ftp://download.intel.com/design/networ k/datashts/27829810.pdf> [retrieved on 2005-05-25]
- INTEL CORPORATION: "IXB3208 IX Bus Scaling Fabric Device" PRODUCT BRIEF, [Online] no. 279019-001, 7 November 2000 (2000-11-07), pages 1-2, XP002329425 Retrieved from the Internet: URL:http://www.capsl.udel.edu/~fchen/proje cts/np/docs/manual/volumnI/IXB3208%20Produ ct%20Brief.pdf> [retrieved on 2005-05-25]

## Description

### FIELD OF THE INVENTION

This invention relates to the field of telecommunications, and more particularly to data communications.

### BACKGROUND OF THE INVENTION

Data communication is a reflection of life in the 21^{st} century. Applications, such as e-mail and the Internet, has increasingly become mainstream. Moreover, a move is afoot for migrating voice traffic from circuit-switched type networks to packet-switched type networks in support of Voice over IP ("VoIP") applications. Consequently, data traffic has continued to increase as acceptance and adoption of these applications continue to grow.

With the continued expansion of data applications, there is a growing consumer demand for accurate wired and wireless high-speed access. Systems supporting data communication typically employ a number of Application Processing ("AP") or communication nodes. These AP nodes may be driven by wired and wireless high-speed access, as well as VoIP applications.

AP nodes are interconnected through a transport or interconnect fabric fabric for the transmission of information therebetween. To support high-speed data communication, these interconnect fabrics may be cell or packet based to enable any one of a number of distinct high-speed data communication formats. Consequently, the routing or forwarding of cell or packet information has become an increasingly critical function.

Each AP node is typically realized by a circuit board. Within each AP node, cell or packet information may be routed or forwarded to any number of on-board processing devices by means of a dedicated switch. This switch effectively manages information traffic flow for the AP node's circuit board.

While the use of a dedicated switch is effective, there are notable limitations. Firstly, the dedicated switch consumes a non-trivial amount of power. Consequently, power consumption and heat dissipation issues may require attention. Moreover, the cost of each dedicated switch, and the space each consumes on the AP node's circuit board may also impact on the design and efficiency of the system.

Therefore, a need exists for an AP node architecture that avoids the limitations of the dedicated switch. Moreover, a routing architecture is desired that is supportive of improved power and cooling budgets, reduced board space consumed and overall cost.

With respect to INTEL CORPORATION: "Intel IXP1200 Network Processor" DATASHEET, [Online] no. 278298-010, December 2001 (2001-12), pages 1-25, XP002329424 Retrieved from the Internet:
URL:ftp://download.intel.com/design/network/datashts/27829810.pdf> [retrieved on 2005-05-25], this datasheet for Intel IXP1200 Network Processor discloses a hybrid data processor coupled to another hybrid data processor and to a network interface device over a same IX bus.

With respect to INTEL CORPORATION: "IXB3208 IX Bus Scaling Fabric Device" PRODUCT BRIEF, [Online] no. 279019-001, 7 November 2000 (2000-11-07), pages 1-2, XP002329425 Retrieved from the Internet:
URL:http://www.capsl.udel.edu/~fchen/project/np/docs/manual/volumnI/IXB3208% 20Product%20Brief.pdf> [retrieved on 2005-05-25],
this product Brief for IXB3208 IX Bus Scaling Fabric Device discloses a full crossbar switch fabric for use with Intel IXP1200 Network Processor.

### SUMMARY OF THE INVENTION

Apparatus according to the present invention is set out in the independent claim, to which the reader is now referred. Preferred features are laid out in the dependent claims.

The present invention provides a routing architecture for improving power and cooling budgets, as well as reducing board space consumed and overall cost. More particularly, the present invention provides a communication node architecture for routing cell and/or packet information between application processors. The present invention realizes the communication node architecture without the need for a dedicated switching device, such as an Ethernet switch, for example. The communication node architecture may be deployed in numerous applications, including, for example, a radio node controller, base station controller, and a traffic-processing controller.

In one embodiment, the communication node architecture of the present invention includes at least two network-processing devices for routing or forwarding cell and/or packet information, instead of the dedicated switching device known in the art. Each of the network processing devices may be interconnected by way of a shared bus structure, such as, for example, a Peripheral Component Interconnect ("PCI") bus. The shared bus structure may also couple the network processing devices with a general-purpose processing device; which controls the duties performed by each of the network processing devices. At least one of the network processing devices may be coupled with a fabric for interconnecting one node with other nodes. The one or more network processing devices may be coupled to a fabric through a system interface. Additionally, cell and/or packet information may be received through a maintenance interface. It should be noted that the cell and/or packet information received by the maintenance interface (e.g., Operations and/or Maintenance type information) might be distinct over that received by the system interface (e.g., Bearer Transport Path Processing and/or Call Control type information). Consequently, the network processing device(s) may receive cell and/or packet information from the fabric through the system interface for routing or forwarding within the node.

In a further embodiment, the node architecture may also employ a multiplexer. The multiplexer may be used for coupling the network processing device(s) with the system interface and/or the maintenance interface. By this arrangement, the network processing device(s) may receive cell and/or packet information, multiplexed, from the maintenance interface and through the interconnect fabric by means of the system interface.

In still another embodiment, the one or more network processing device(s) may be coupled with an external system input/output through an interface device. The interface device may support one or more transport mechanisms. Consequently, the interface device may be designed to support, for example, Asynchronous Transfer Mode ("ATM"), Internet Protocol ("IP"), and/or Frame Relay ("FR").

### BRIEF DESCRIPTION OF THE DRAWINGS

The present invention will be better understood from reading the following description of non-limiting embodiments, with reference to the attached drawings, wherein below:
**FIG.1** depicts a digital communication system;
**FIG. 2** depicts an Applications Processing or communication node architecture; and
**FIG. 3** depicts an embodiment of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

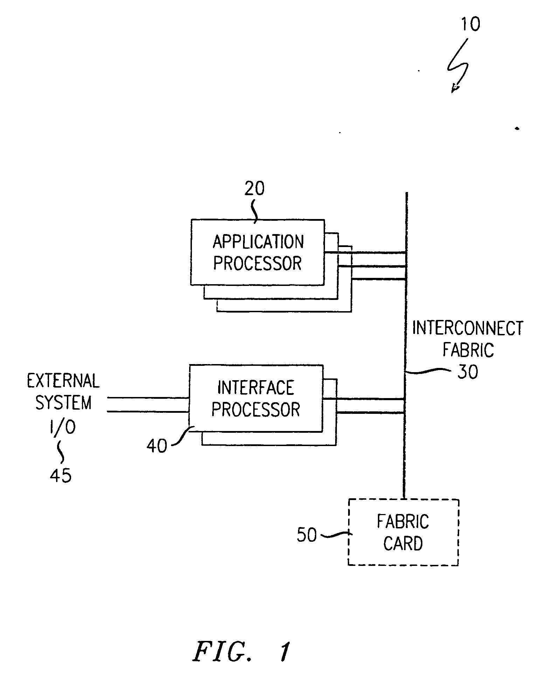

Referring to **FIG. 1**, a high-level block diagram of a digital communication system **10** is illustrated. As depicted, system **10** is capable of supporting various services, including the communication of voice and/or data traffic. More particularly, system **10** may enable wired and/or wireless communication applications.

To further serve these purposes, digital communication system **10** includes a plurality of Application Processing ("AP") or communication nodes **20**. Each of the nodes **20** perform a function(s) required by system **10** and may be realized by a printed circuit board ("PCB"). The functions performed may include, for example, Bearer Transport Path Processing, Call Control, Operations and Maintenance. AP nodes **20** may be configured to execute the same function(s), and therefore may be realized using the same or similar design. In the alternative, each AP node **20** may serve a differing function(s), in part or in whole, depending on the requirements of system **10**, and therefore may be have relatively distinct configurations.

System **10** also includes a plurality of Interface Processor ("IP") nodes **40**. Each IP node **40** may interface with an external input/output port **45**. Moreover, each Interface Processor node **40** may also perform some processing on an incoming information stream to/from external input/output port **45**.

Digital communication system **10** may also include a transport or interconnect fabric **30** for enabling the transmission of information between AP nodes **20**. Using any one of a number of distinct communication formats, interconnect fabric **30**, in conjunction with system **10**, may be cell and/or packet based to support high-speed communication. As a result, the routing or forwarding of cell and/ or packet information within system **10** is becoming an increasingly critical function.

Each AP node **20**, to this end, may be interconnected with one another through interconnect fabric **30**. Depending on the type of interconnect, a dedicated fabric card **50** may be required. Interconnect fabric **30** may be realized using an interconnect format type, depending on the number of applications supported by communication system **10**. The available interconnect format types may include, for example, a Time Division Multiplexed ("TDM") bus for use in circuit switched applications, Cell Based Interconnect for use in ATM applications, and/or Ethernet connectivity for use with packet switched applications. It should also be noted that digital communication system **10** may also support multiple interconnect format types, simultaneously, as well as a hybrid interconnect format therefrom.

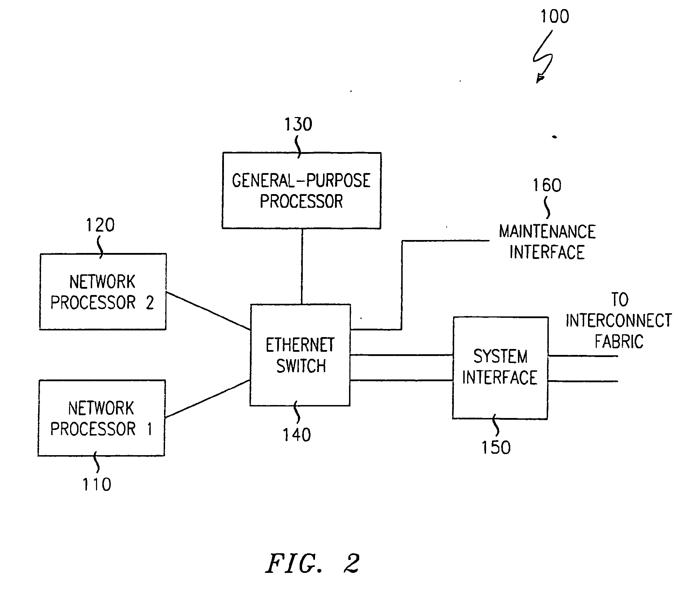

Referring to **FIG. 2**, a block diagram of an exemplary architecture for an Application Processing ("AP") or communication node **100** is illustrated. AP node **100** performs one or more functions within the context of an application, such as, for example, digital communication system **10** of **FIG.1**.

To support high-speed data communication, AP node **100** may employ multiple processors. As shown, AP node **100** includes a first and a second network processor, **110** and **120**, at least one of which receives cell and/or packet information. Moreover, AP node **100** also comprises a general-purpose processor **130**, which along with network processors, **110** and **120**, are coupled with each other, as well as an interconnect fabric (not shown) by means of a dedicated switch **140**. As shown, dedicated switch **140** may be realized by an Ethernet switch, for example, particularly where the interconnect fabric is provided using an Ethernet based scheme.

Ethernet switch **140** performs several functions as part of AP node **100**. Firstly, Ethernet switch **140** provides an interconnection between multiple "ports" on AP node **100**, including redundant interfaces to an interconnect fabric, including a system interface **150**, as well as a maintenance interface **160**. Moreover, switch **140** provides an interconnection between multiple "ports" on AP node **100** and processors **110**, **120** and **130**.

Moreover, Ethernet switch **140** also functions as a routing device. Here, switch **140** routes and forwards Ethernet packets between ports. These ports may typically be based on an L2 (Ethernet) or an L3 (Internet protocol) set of routing instructions. It should be noted that general-purpose processor **130** may act here as a traffic control mechanism for switch **140**.

Ethernet switch **140** may also provide a fail-over feature for AP node **100**. Here, switch **140** may assist in handling the fail-over of redundant interfaces to an interconnect fabric, such as system interface **150**. Moreover, switch **140** may switch from an active port to a standby port in the event of the detection of a failure on the active port.

It should be noted that Ethernet switch **140** may perform other functions, as called for by AP node **100**. The functions may be of particular relevance given the application of the AP node **100** in the context of its application in a digital communication system. These functions may include buffering, support for Class of Service, and flow control, for example.

While the use of Ethernet switch **140** within AP node **100** serves several beneficial purposes, notable limitations remain. Firstly, the dedicated switch consumes a significant amount of power. Consequently, power consumption and heat dissipation issues may require attention. Moreover, the cost of each dedicated switch, and the space each consumes on the AP node's circuit board may also impact on the design, capacity and efficiency of the system.

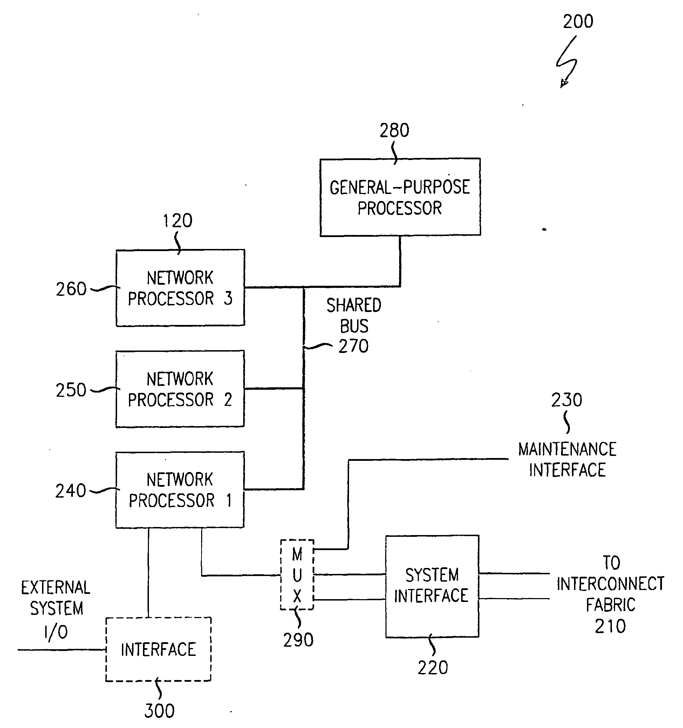

Referring to **FIG. 3**, an embodiment of the present invention is illustrated. More particularly, a routing architecture **200** is depicted for addressing the limitations associated with using dedicated (e.g., Ethernet) switch **140** within AP node **100** of **FIG. 2**. Routing architecture **200** obviates the need for a dedicated switch device in the architecture, in favor of a more distributed approach.

It should be noted that the flexible nature of routing architecture **200** might enable an AP node to support the native transport of multiple cell or packet protocols simultaneously. This added flexibility may allow an AP node(s) to address additional applications previously not possible in the known art. In this regard, routing architecture **200** may simultaneously route and/ or forward a cell(s) and/or a packet(s) (e.g., Ethernet, IP, ATM), in parallel, for example, within architecture **200**.

Routing architecture **200** provides a superset of the capabilities without requiring a dedicated switch element for performing cell and/or packet routing and/or forwarding. To this end, routing architecture **200** receives cell and/or packet information through an interconnect fabric **210**. Interconnect fabric **210** couples the AP node, as reflected in routing architecture **200,** with another AP node (not shown). It should be noted that in the present disclosure, while reference is made to routing architecture **200** receiving cell and/or packet information from interconnect fabric **210**, cell and/or packet information may also be transmitted to interconnect fabric **210** after being processed by the components forming routing architecture **200**, disclosed hereinbelow. Consequently, for simplicity, reference to term receiving herein may include transmitting.

Received cell and/or packet information may be fed into or out of routing architecture **200** by means of a system interface **220**. Cell and/or packet information may also be received by a maintenance interface **230**. In one embodiment, the cell and/or packet information received by maintenance interface **230** may correspond with Operations and/or Maintenance type information, for example. In contrast, the cell and/or packet information received by system interface **220** may correspond with Bearer Transport Path Processing and/or Call Control type information, for example.

To process the aforementioned cell and/or packet information, routing architecture **200** includes a plurality of network processing ("NP") devices, **240**, **250** and **260**. More particularly, one or more NP devices, **240**, **250** and/ or **260**, may be designated for receiving cell and/or packet information from interconnect fabric **210** by means system interface **220**. Thusly, system interface **220** may couple at least one NP device, **240**, **250** and/ or **260**, with the fabric **210** to facilitate communication between distinct AP nodes.

To support the functionality assumed by NP devices, **240**, **250** and **260**, routing architecture **200** may also include a shared bus structure **270**. Shared bus structure **270** provides a means for coupling each of NP devices, **240**, **250** and **260**, with one another on the same AP node corresponding with routing architecture **200**. In one embodiment, shared bus structure **270** may comprise a Peripheral Component Interconnect ("PCI") bus.

Routing architecture **200** also may include a general-purpose processor **280**. General-purpose processor **280** may serve a multitude of functions, including controlling each of NP devices, **240**, **250** and **260**. Moreover, general-purpose processor **280** may also perform maintenance on the AP node, as realized by routing architecture **200**. In support of these functions, general-purpose processor **280** may also be coupled with shared bus structure **270**.

By the above configuration, NP devices, **240**, **250** and/ or **260**, may also perform additional functions. One or more NP devices, **240**, **250** and/or **260**, for example, may determine the destination of the received cell and/or packet information within routing architecture **200**. In one embodiment, the destination of the cell and/or packet information may be determined in response to one or more stored routing rules and/or particular characteristics of the cell and/or packet information (e.g., packet type, L2, L3, destination address, source address and other packet information). Thereafter, at least one NP device, **240**, **250** and/or **260**, may forward or route the cell and/or packet information to the determined destination.

It should be noted that one or more NP devices, **240**, **250** and/or **260**, may support peer-to-peer routing. Peer-to-peer routing here may mean routing between one NP device, **240, 250** or **260,** and one or more other NP devices, **240, 250** and/or **260.** Similarly, peer-to-peer routing may also include routing between general-purpose processor **280** and one or more NP devices, **240, 250** and/or **260**.

Routing architecture **200** may also support a direct delivery feature. Here, a cell(s) and/or packet may be delivered directly from general-purpose processor **280** or one NP device, **240**, **250** or **260**, into the memory of one or more other processing devices (e.g., another NP device(s), **240**, **250** and/or **260**, and/or general-purpose processor **280**) via the shared bus structure **270,** for example. By this arrangement, the delivered cell(s) or packet(s) may arrive without interrupting (or waking these one or more other processing devices), which may be processing other information (or sleep mode operation) at the time. Consequently, when one or more of these other processing devices are ready (or awoken), the specific cell(s) or packet(s) is waiting to expedite its subsequent internal processing. In the alternative, the specific cell(s) or packet(s) may arrive directly into the memory of one or more other processing devices, thereby initiating an interrupt (or a wake up) routine therein.

It should also be noted that the routing and/or forwarding of the cell and/or packet information between NP devices, **240**, **250** and/or **260**, and/or general-purpose processor **280** relies on aspects of programmability to exploit the flexibility structure of architecture **200**. In this regard, the stored routing rules may vary from simple to complex. However, these the routing rules may be embodied in software, and thusly updated and/or upgraded to provide even greater flexibility.

Routing architecture **200** may also allow for deep packet inspection at the NP device level. Here, deep packet inspection may afford architecture **200** the ability to give routing software access to some or all of the fields in the cell and/or packet. Routing and/or forwarding may then be performed using a single field or a plurality of fields obtained from a plurality of protocol layers in the packet, for example. For example, Ethernet packets with the same layer 3 destination IP address may be delivered to different NP devices, **240**, **250** and/or **260**, based on layer 4 and higher parameters (e.g., UDP port number).

In one embodiment, routing architecture **200** also comprises a multiplexer **290**. Multiplexer **290** couples system interface **220** and maintenance interface **230** with one or more of NP devices, **240**, **250** and/ or **260**. By this arrangement, multiplexer **290** creates a multiplexed stream from cell and/or packet information received of system interface **220** and of maintenance interface **230** to enable at least one NP device, **240**, **250** and/or **260**, to perform various process functions detailed herein.

Routing architecture **200** may also comprise at least one external system input/ output interface **300**. External system input/ output interface **300** may be coupled with one or more NP devices, **240**, **250** and/or **260**. As an external system input/output interface **300**, support for one or more transport mechanism types may be required. Consequently, external system input/output interface **300** may support at least one of Asynchronous Transfer Mode, Internet Protocol, and Frame Relay, for example.

### EXEMPLARY EMBODIMENTS

In an AP node based on architecture of the present invention, the routing and/or forwarding of cells or packets should be performed by one of the NP devices. In a typical application of the AP node, this routing and/or forwarding functionality may require only a subset of the resources of the NP device(s). As a result, an unidentified amount of resources may remain available in the NP device(s) for other processing.

Referring to the embodiment of **FIG. 3**, at least NP device **240**, for example, may receive packets or cells coming from system interface **220** or maintenance interface **230**, possibly via through optional multiplexer **290**. At least one NP device **240** should determine a destination, such as another NP device **250** and/or NP device **260** and/or general-purpose process **280**, for a given cell and/or packet and move the cell and/or packet to that designated device(s) via the Shared Bus or some other convenient interconnection means. If the destination for a given cell and/or packet is NP device itself, the packet should be forwarded locally. The process in which the cell and/or packet information is moved should be based on a set of locally stored routing rules, and possibly other characteristics of the cell or packet, such as the source port.

In the reverse direction, at least NP device **240**, for example, may collect cells and/or packets from the remaining processors via the Shared Bus. Consequently, at least NP device **240**, for example, may then forward cells and/or packets to the appropriate port based on locally stored routing rules. Here, at least NP device **240** may also be capable of supporting peer-to-peer routing between processors.

It can be seen that the important functions previously performed by a dedicated switch, such as Ethernet switch **140** of **FIG. 2**, may be distributed between the routing software in at least one network processor, such as NP device **240** of **FIG. 3**, for example, along with a shared bus structure, and possibly an optional multiplexer. In this regard, shared bus structure and the optional multiplexer may handle the interconnection between the various "ports" on the board, including the redundant system interfaces, the local maintenance interface, and the multiple processors. Moreover, the forwarding and/or routing of cell and/or packets may be performed by a subset of the processing resources in one of the NP devices. Similarly, handling the fail-over of the redundant system interfaces may be performed by a combination of one of the NP devices and the optional multiplexer. Finally, functionality such as buffering, support for Class of Service, and flow control may also be performed by a subset of the processing resources in an NP device.

It should be noted that without the dedicated switch, such as Ethernet switch **140** of **FIG. 2**, the routing architecture of the present invention may exhibit improved performance in terms of power budget, heat dissipation, board space, and cost. Given these enhancements, it is possible to design an AP node with more processor elements, further boosting system performance. In addition to the performance enhancements outlined above, this architecture exhibits enhanced flexibility, which will allow Application Processors designed with this architecture to address new applications.

By eliminating the need for the dedicated switch in the architecture, it is possible for an AP node to perform additional functions. For example, as a result of the present invention, an AP node may be able to simultaneously support multiple cell or packet transport protocols, as well as their transfer therein. This may be attributed to the cell or packet routing and/or forwarding mechanism implemented in a programmable element of one of the processors on the board.

The flexibility of the routing architecture of the present invention has several advantages. First, an AP node utilizing this architecture may support multiple cell or packet transport mechanisms, where the cells and packets are transported in their native format. This may provide performance enhancements over a system using encapsulation to support multiple formats. Secondly, an AP node in accordance with the present invention may be capable of supporting additional applications. It can easily be seen that an AP node may be configured to support applications requiring interfaces to external system input/output, such as an Interface Processor, for example.

Furthermore, the routing architecture of the present invention may also support pre-stripping of packet header information. More particularly, a packet(s) may be routed and/or forwarded amongst processing devices forming the AP node without the need to utilize header information. This is in contrast with dedicated switch of other architectures used previously (e.g., Ethernet switch **140** of **FIG. 2**).

It should be noted that NP devices, **240**, **250** and/or **260**, shared bus structure **270**, and general-purpose processor **280**, may be each be configured in furtherance of the flexibility of routing architecture **200**. As stated hereinabove, routing architecture **200** may simultaneously and/or concurrently route and/or forward a cell(s) and/or a packet(s). Consequently, architecture **200** cell(s) and/or packet(s) data may be moved between NP devices, **240**, **250** and/or **260**, shared bus structure **270**, and/ or general-purpose processor **280**.

In another embodiment of the present invention, if the routing and/or forwarding mechanisms detailed herein were operating on as Ethernet packets, an ATM Interface block may be coupled with an external system input/output for transporting ATM cells over some appropriate physical interface. Here, the ATM Interface block may also connected to one of the network processors, where the routing and/or forwarding mechanisms may be implemented. It may be advantageous in this example for the connection means to the network processor to be realized by a Utopia bus, for example.

Operation of the routing architecture of the present invention would be as follows. Initially, one of the network processors may be programmed to support the additional transport means (e.g., Utopia), and be used for an additional set of locally stored routing rules to determine the appropriate destination processor for an incoming cell. Here, the identified network processor may then forward the cell over the shared bus structure or the like. If the cell is destined for the one network processor itself, the cell may be forwarded locally.

In the reverse direction, the one network processor may collect cells from the other processors via the Shared Bus. After examining the locally stored routing rules, the one network processor may determine that the cells are destined for the ATM Interface block. Thereafter, the one network processor may enable the cells to be forwarded over the Utopia bus, for example.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the scope of the present invention. It is therefore contemplated that the appended claims will cover any such modifications or embodiments as fall within the true scope of the invention.

## Claims

1. A digital communication system (10) for processing at least one of cell and packet information, the digital communication system comprising:
at least one node (200) interconnected through a fabric (30), the at least one node comprising:
a plurality of network processing devices (240, 250, 260);
a shared bus structure (270) for coupling each of the plurality of network processing devices with each other; and
an interface (220) for coupling at least one of the plurality of network processing devices (240) with the fabric to support communication between nodes;
the digital communication system **CHARACTERIZED IN THAT**
the at least one of the plurality of network processing devices (240) being operable for receiving at least one of the cell and the packet information, for determining a destination within the node for the at least one of the cell and the packet information, and for at least one of routing and forwarding the at least one of the cell and the packet information to the destination; and
the interface (220) being coupled to the at least one of the plurality of network processing devices (240) via a coupling means different from the shared bus structure (270).

2. The digital communication system of Claim 1, wherein the destination is determined in response to at least one of stored routing rules and characteristics of the at least one of the cell and the packet information.

3. The digital communication system of Claim 2, wherein the at least one of the plurality of network processing devices (240) employ dynamically updated routing rules.

4. The digital communication system of Claim 1, wherein the at least one of the plurality of network processing devices (240) directly delivers the at least one of routing and forwarding the cell and the packet information into a memory of the destination.

5. The digital communication system of Claim 1, wherein the at least one of the plurality of network processing devices (240) support peer-to-peer routing.

6. The digital communication system of Claim 1, wherein the interface (220) provides the at least one of the cell and the packet information to the at least one of the plurality of network processing devices (240), the interface (220) comprising a multiplexer (290) for creating a multiplexed stream from the at least one of the cell and the packet information.

7. The digital communication system of Claim 1, wherein the node (200) further comprises:
a general-purpose processor (280) for at least one of controlling the plurality of network processing devices (240, 250, 260) and performing maintenance on the node (200), wherein the shared bus structure (270) couples the general-purpose processor (280) with each of the network processing devices (240, 250, 260).

8. The digital communication system of Claim 7, wherein the shared bus structure (270) comprises a Peripheral Component Interconnect bus.

9. The digital communication system of Claim 7, wherein the general-purpose processor (280) supports peer-to-peer routing with the at least one of the plurality of network processing devices (240).

10. The digital communication system of Claim 1, comprising:
at least one external system input/output interface (300), wherein the external system input/output interface supports at least one transport mechanism type, the at least one transport mechanism type comprising at least one of Asynchronous Transfer Mode, Internet Protocol, and Frame Relay.

## Patentansprüche

1. Digitales Kommunikationssystem (10) zum Verarbeiten von Zellen- und/oder Paketinformationen, wobei das digitale Kommunikationssystem folgendes umfaßt:
mindestens einen Knoten (200), der durch ein Koppelfeld (30) verbunden wird, wobei der mindestens eine Knoten folgendes umfaßt:
mehrere Netzwerkverarbeitungseinrichtungen (240, 250, 260);
eine gemeinsam benutzte Busstruktur (270) zum Koppeln jeder der mehreren Netzwerkverarbeitungseinrichtungen miteinander; und
eine Schnittstelle (220) zum Koppeln mindestens einer der mehreren Netzwerkverarbeitungseinrichtungen (240) mit dem Koppelfeld zur Unterstützung der Kommunikation zwischen Knoten;
wobei das digitale Kommunikationssystem **dadurch gekennzeichnet ist, daß**
die mindestens eine der mehreren Netzwerkverarbeitungseinrichtungen (240) zum Empfangen der Zellen- und/oder Paketinformationen, zum Bestimmen eines Ziels in dem Knoten für die Zellen- und/oder Paketinformationen und zum Routen und/oder Weiterleiten der Zellen- und/oder Paketinformationen zu dem Ziel betreibbar ist; und
die Schnittstelle (220) über von der gemeinsam benutzten Busstruktur (270) verschiedene Koppelmittel an die mindestens eine der mehreren Netzwerkverarbeitungseinrichtungen (240) angekoppelt ist.

2. Digitales Kommunikationssystem nach Anspruch 1, wobei das Ziel als Reaktion auf gespeicherte Routing-Regeln und/oder Eigenschaften der Zellen- und/oder Paketinformationen bestimmt wird.

3. Digitales Kommunikationssystem nach Anspruch 2, wobei die mindestens eine der mehreren Netzwerkverarbeitungseinrichtungen (240) dynamisch aktualisierte Routing-Regeln verwenden.

4. Digitales Kommunikationssystem nach Anspruch 1, wobei die mindestens eine der mehreren Netzwerkverarbeitungseinrichtungen (240) die mindestens eine der Zellen- und Paketinformationen direkt in einen Speicher des Ziels abliefert.

5. Digitales Kommunikationssystem nach Anspruch 1, wobei die mindestens eine der mehreren Netzwerkverarbeitungseinrichtungen (240) Peer-to-peer-Routing unterstützt.

6. Digitales Kommunikationssystem nach Anspruch 1, wobei die Schnittstelle (220) die Zellen- und/oder Paketinformationen der mindestens einen der mehreren Netzwerkverarbeitungseinrichtungen (240) zuführt, wobei die Schnittstelle (220) einen Multiplexer (290) zum Erzeugen eines gemultiplexten Stroms aus den Zellen- und/oder Paketinformationen umfaßt.

7. Digitales Kommunikationssystem nach Anspruch 1, wobei der Knoten (200) ferner folgendes umfaßt:
einen Vielzweckprozessor (280) zum Steuern der mehreren Netzwerkverarbeitungseinrichtungen (240, 250, 260) und/oder Durchführen von Wartung an dem Knoten (200), wobei die gemeinsam benutzte Busstruktur (270) den Vielzweckprozessor (280) mit jeder der Netzwerkverarbeitungseinrichtungen (240, 250, 260) koppelt.

8. Digitales Kommunikationssystem nach Anspruch 7, wobei die gemeinsam benutzte Busstruktur (270) einen Bus des Typs Peripheral Component Interconnect umfaßt.

9. Digitales Kommunikationssystem nach Anspruch 7, wobei der Vielzweckprozessor (280) Peer-to-peer-Routing mit der mindestens einen der mehreren Netzwerkverarbeitungseinrichtungen (240) unterstützt.

10. Digitales Kommunikationssystem nach Anspruch 1, umfassend:
mindestens eine externe System-Eingangs-/Ausgangsschnittstelle (300), wobei die externe System-Eingangs-/Ausgangsschnittstelle mindestens einen Transportmechanismustyp unterstützt, wobei der mindestens eine Transportmechanismustyp asynchronen Transfermodus, Internet-Protokoll und/oder Frame-Relay umfaßt.

## Revendications

1. Système de communication numérique (10) pour traiter au moins l'une d'informations de cellule et de paquet, le système de communication numérique comprenant :
au moins un noeud (200) interconnecté par le biais d'une structure (30), l'au moins un noeud comprenant :
une pluralité de dispositifs de traitement de réseau (240, 250, 260) ;
une structure de bus partagé (270) pour coupler chacun de la pluralité de dispositifs de traitement de réseau aux autres ; et
une interface (220) pour coupler au moins l'un de la pluralité de dispositifs de traitement de réseau (240) à la structure afin de supporter la communication entre les noeuds ;
le système de communication numérique étant **CARACTERISE EN CE QUE**
l'au moins un de la pluralité de dispositifs de traitement de réseau (240) est exploitable pour recevoir au moins l'une des informations de cellule et de paquet pour déterminer une destination dans le noeud pour l'au moins une des informations de cellule et de paquet, et pour au moins l'un du routage et du renvoi de l'au moins une des informations de cellule et de paquet jusqu'à la destination ; et
l'interface (220) étant couplée à l'au moins un de la pluralité de dispositifs de traitement de réseau (240) par l'intermédiaire d'un moyen de couplage différent de la structure de bus partagé (270).

2. Système de communication numérique selon la revendication 1, dans lequel la destination est déterminée en réponse à au moins l'une de règles de routage et de caractéristiques mémorisées de l'au moins une des informations de cellule et de paquet.

3. Système de communication numérique selon la revendication 2, dans lequel l'au moins un de la pluralité de dispositifs de traitement de réseau (240) emploie des règles de routage mises à jour dynamiquement.

4. Système de communication numérique selon la revendication 1, dans lequel l'au moins un de la pluralité de dispositifs de traitement de réseau (240) distribue directement l'au moins une des informations de cellule et de paquet dans une mémoire de la destination.

5. Système de communication numérique selon la revendication 1, dans lequel l'au moins un de la pluralité de dispositifs de traitement de réseau (240) supporte un routage d'égal à égal.

6. Système de communication numérique selon la revendication 1, dans lequel l'interface (220) fournit l'au moins une des informations de cellule et de paquet à l'au moins un de la pluralité de dispositifs de traitement de réseau (240), l'interface (220) comprenant un multiplexeur (290) pour créer un train multiplexé de l'au moins une des informations de cellule et de paquet.

7. Système de communication numérique selon la revendication 1, dans lequel le noeud (200) comprend en outre :
un processeur universel (280) pour au moins une de la commande de la pluralité de dispositifs de traitement de réseau (240, 250, 260) et de la maintenance sur le noeud (200), où la structure de bus partagé (270) couple le processeur universel (280) à chacun des dispositifs de traitement de réseau (240, 250, 260).

8. Système de communication numérique selon la revendication 7, dans lequel la structure de bus partagé (270) comprend un bus d'Interconnexion de Composants périphériques.

9. Système de communication numérique selon la revendication 7, dans lequel le processeur universel (280) supporte le routage d'égal à égal avec l'au moins un de la pluralité de dispositifs de traitement de réseau (240).

10. Système de communication numérique selon la revendication 1, comprenant :
au moins une interface d'entrée/sortie de système externe (300), dans lequel l'interface d'entrée/sortie de système externe supporte au moins un type de mécanisme de transport, l'au moins un type de mécanisme de transport comprenant au moins l'un du Mode de Transfert asynchrone, du Protocole Internet et du Relais de Trames.
